# EUROPEAN PATENT SPECIFICATION

(11) **EP 2 866 378 B1**
(45) Date of publication and mention of the grant of the patent: **17.10.2018**
(21) Application number: 13804756.8
(22) Date of filing: 07.06.2013
(51) Int. Cl.: H04L 12/24, H04L 12/26, H04L 12/707, H04L 12/703

(54) **PROTECTION SWITCHING IN A PACKET TRANSPORT NETWORK**
SCHUTZSCHALTUNG IN EINEM PACKETTRANSPORTNETZ
COMMUTATION DE PROTECTION DANS UN RÉSEAU DE TRANSPORT DE PAQUETS

(30) Priority: 25.07.2012 CN 201210259596
(43) Date of publication of application: 29.04.2015
(73) Proprietor: ZTE Corporation, Shenzhen, Guangdong 518057 (CN)
(72) Inventor: WANG, Hua, Shenzhen Guangdong 518057 (CN); CUI, Chunlai, Shenzhen Guangdong 518057 (CN)
(74) Representative: AWA Sweden AB
(86) International application number: PCT/CN2013/076941
(87) International publication number: WO 2013/185567

(56) References cited:
- EP-A1- 2 028 768
- WO-A1-2010/031945
- CN-A- 1 937 481
- CN-A- 102 281 168
- CN-A- 102 281 168
- CN-A- 102 468 977
- US-A1- 2012 163 163

## Description

### Technical Field

The present invention relates to a Packet transport network (PTN for short), and in particular, to an apparatus and method for protection switching of a PTN.

### Background of the Related Art

PTN devices typically require supporting three protection modes, which are network protection (i.e., Network Node Interface (NNI) protection), access link protection (i.e., User Node Interface (UNI) protection) and device-level protection. The network protection is divided into linear protection (such as path linear protection, subnet connection protection, etc.), ring protection (such as single ring protection, ring intersection protection, ring tangent protection, etc.) and Traffic Engineer Fast ReRoute (TE-FRR) protection; the access link protection is divided into Link Aggregation Group (LAG for short) protection and linear Multiplexing Section Protection (MSP), and the dual-homing protection is a functional combination of the linear protection and the access link protection. The network protection is mainly triggered by an Operation Administration and Maintenance (OAM) detection technology of a service layer. Wherein, a Muti-Protocol Label Switching-Transport Profile (MPLS-TP) network usually uses a Continuity Check (CC) mode; and MPLS/Internet Protocol (IP) network usually uses a Bidirectional Forwarding Detection (BFD) mode.

The PTN device requires the time from service interruption due to a single-point Signal Fail (SF) to recovery by protection not to exceed 50ms in a condition that the hold-off timer is 0.

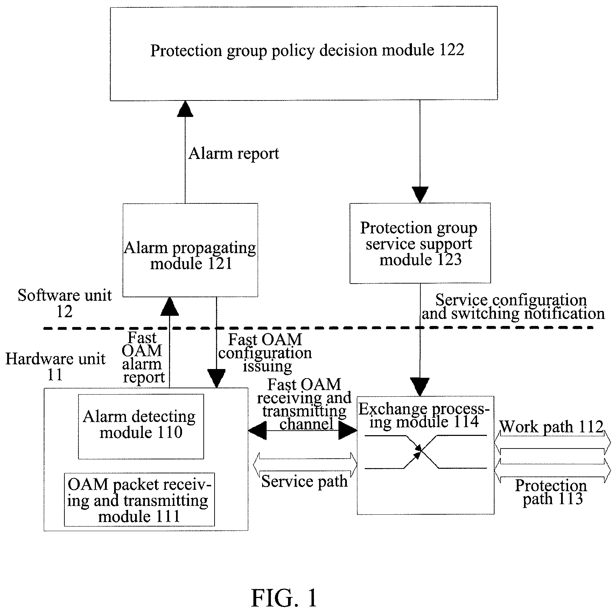

As shown in Fig. 1, an apparatus for protection switching of a PTN in the related art is divided into two parts, i.e., a hardware unit 11 and a software unit 12. The hardware unit 11 includes an alarm detecting module 110, an OAM packet receiving and transmitting module 111, a work path 112, a protection path 113 and an exchange processing module 114 etc.; and the software unit 12 includes an alarm propagating module 121, a protection group policy decision module 122 and a protection group service support module 123 etc. A process flow of performing protection and switching using the apparatus includes the following steps.

In step 1, a protection group service support module allocates services of a protection group to the exchange processing module, and configures an OAM on the service.

In step 2, an OAM packet receiving and transmitting module at a source end transmits an OAM message according to configured timing to monitor the network; and after receiving the OAM message on a work path and a protection path, an exchange processing module at a sink source forwards the OAM message to an OAM packet receiving and transmitting module at the sink source.

In step 3, the OAM packet receiving and transmitting module at the sink source parses the received OAM message, and transmits the extracted related information to an alarm detecting module at the sink end.

In step 4, a hardware chip (such as a Field-Programmable Gate Array (FPGA) or a Network Processor (NP)) in the alarm detecting module at the sink end detects a fast OAM alarm, wherein, the alarm is generally configured to be transmitted in 3.3ms, and a period for detecting the alarm is 10ms.

In step 5, Central Processing Unit (CPU) software drives an alarm propagating module at the sink end to read and propagate the OAM alarm information by means of regular polling (generally 10ms or longer), interruption, or message submission. For example, in a system and method for regularly processing an OAM message disclosed in an invention patent application No.CN200810218273, an exchange processing module is used to detect an OAM alarm, and is notified to the CPU by submitting a template message.

In step 6, the CPU software searches for a protection group to which the OAM alarm read by the alarm propagating module belongs.

In step 7, a protection group policy decision module at the sink end decides whether it needs to perform protection switching according to the states of the current work path and protection path, and issues the switching policy decision to the protection group service support module at the sink end. For example, when an OAM corresponding to a work path of a protection group has an SF alarm and the protection path is normal, the protection group policy decision module makes a policy decision of switching from the work path to the protection path.

In step 8, the protection group service support module at the sink end issues the protection switching information to the exchange processing module at the sink end through a switching notification, to notify it of switching.

In the above process, except that the steps 1-4 are performed by the hardware, all remaining steps are performed by the CPU software, and therefore, the following problems exist in the existing scheme.
(1) Since the alarm detecting module and the protection group policy decision module are realized by hardware and software respectively, the software can only acquire the alarm by means of polling or interruption. In consideration of serial processing of other processes of the CPU, a polling period generally needs to be set as more than 10ms. For the interruption mode, if there are a lot of protection group configurations for the service, in the case that a large amount of OAM alarms are generated, there must be a lot of interruptions to be generated, resulting in high CPU utilization, and affecting normal processing of other processes;
(2) After acquiring the alarm, the software further needs to propagate alarms of an associated service layer to a client layer, searches for a corresponding protection group and then makes a policy decision according to the situation. This process is relatively complex, and needs to take a long time;
(3) Due to the characteristics of the CPU serial processing, as the service capacity increases continuously, when there are multiple protection group configurations, if it needs to process multiple OAM alarm statuses and make a policy decision, the CPU will be overwhelmed, and is necessarily to become the bottleneck of the whole system, and it is difficult to meet switching requirements of all protection groups within 50ms. Although such bottleneck can be mitigated by selecting a faster CPU or a multi-core CPU, but it will inevitably lead to a problem of an increased cost, and the degree of the resolution is limited. A Chinese invention patent application No.CN201110202397.9 proposes a method for protecting Pseudo-Wires (PWs) with the same source and sink, which binds working PWs with the same source and sink on a Provider Edge Router (PER) together, and only configure OAM detection for one working PW therein. This method is only effective for paths with the same source and sink, and in most actual networking conditions, such condition cannot be met, and therefore, the problem cannot be solved fundamentally.

The document US 2012/163163A1 discloses a protection switching apparatus including: a path management unit to establish a plurality of connection paths for transmitting/receiving packets, and a plurality of protection paths that are able to substitute for the plurality of connection paths, respectively, and to create a protection group including the connection paths and the protection paths; a protection group controller to determine whether failure has occurred on the connection paths, based on path state information for each path included in the protection group, the path state information stored in the protection group table storage, and to issue an instruction for protection switching, according to the result of the determination; and a protection switching unit to perform protection switching of a path in which failure has occurred to a protection path corresponding to the path in which failure has occurred, according to the instruction for protection switching.

The document CN1937481A discloses a protection switching solution for MPLS networks which is implemented in hardware.

### Summary of the Invention

The embodiments of the present invention provide an apparatus and method for protection switching of a PTN, to overcome the problem that the CPU is overwhelmed when protection switching is performed on the PTN in the related art.

The present application is directed to subject-matter as disclosed by the appended claims.

After the schemes of the embodiments of the present invention are used, the following beneficial effects can be achieved.
(1) The detection and notification of an OAM alarm are completed on the same hardware entity, which saves the time for polling alarms by the software, and avoids the problem of system stability due to frequent interruption. In addition, the alarm detection types and a number of entries may be flexibly extended.
(2) When the hardware programmable device processes alarm detection, alarm propagation and protection group information maintenance, they may be independent of each other, which saves the serial waiting time.
(3) For a number of protection groups, based on the parallel processing capability of the hardware programmable devices, all OAMs and protection groups can be traversed cyclically, which saves the polling interval time of the CPU and the protection policy decision can be performed more timely.
(4) The OAM alarm and protection policy decision are processed by means of hardware, which can largely reduce the time for protection switching, and achieves the requirements on lossless switching of 50ms for the PTN, improves the network quality and ensure the reliability of the network; and a scenario where the networking is complex and services of a number of protection groups co-exist can be supported, thereby improving the scalability of the network.

### Brief Description of Drawings

Fig. 1 is a block diagram of modules of an apparatus for protection switching of a PTN in the related art;
Fig. 2 is a block diagram of modules of an apparatus for protection switching of a PTN according to an embodiment of the present invention;
Fig. 3 is a detailed block diagram of modules of an apparatus for protection switching of a PTN according to an embodiment of the present invention;
Fig. 4 is a flowchart of a processing procedure of an alarm propagating module according to an embodiment of the present invention;
Fig. 5 is a flowchart of a processing procedure of a protection group policy decision module according to an embodiment of the present invention; and
Figs. 6(a) and 6(b) are respectively diagrams when paths are normal and when a work path fails in a 1+1 linear protection scenario according an embodiment of the present invention.

### Preferred Embodiments of the Present Invention

The embodiments of the present invention will be described in detail in conjunction with accompanying drawings hereinafter. It should be illustrated that without conflict, the embodiments in the application and the features of the embodiments can be randomly combined with each other.

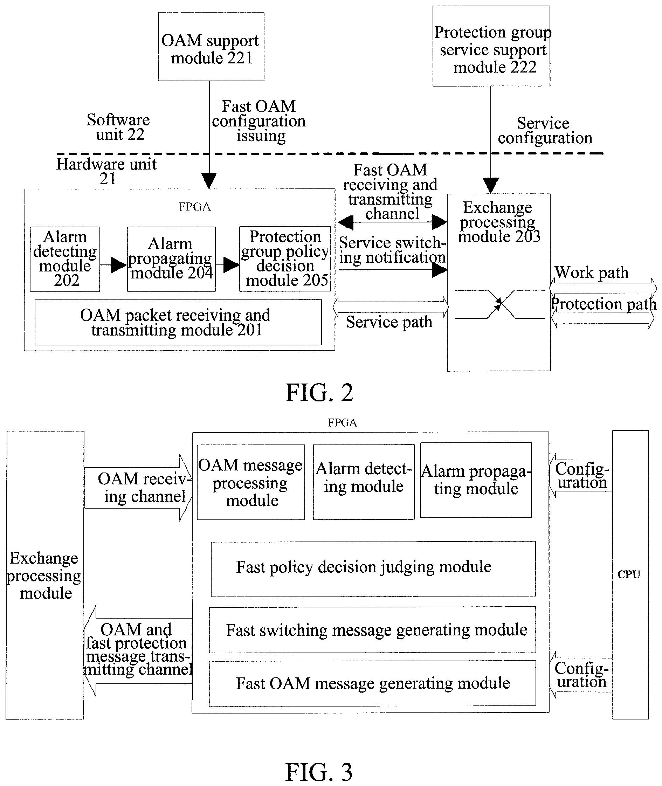

As shown in Fig. 2, the whole apparatus for protection switching includes two parts, i.e., a hardware unit 21 and a software unit 22. The difference from the existing apparatus for protection switching is that in addition to the alarm detecting module 202, the OAM packet receiving and transmitting module 201 and the exchange processing module 203, the hardware unit 21 further includes an alarm propagating module 204 and a protection group policy decision module 205, which are implemented by hardware programmable devices. The software unit 22 is only responsible for OAM configuration and protection group service configuration.

In the above modules included in the hardware unit 21 of the apparatus for protection switching of a PTN,
the OAM packet receiving and transmitting module 201 is primarily used to monitor reception and transmission of an OAM protocol message of the network. The OAM protocol message may be Connectivity Fault Management (CFM), Multi-Protocol Label Switching-Transport Profile (MPLS-TP), OAM or MPLS OAM etc.; and the OAM protocol message is generally configured to be transmitted quickly and regularly in 3.3ms;
the alarm detecting module 202 is used to monitor a failure condition of the network in real time. The monitoring means may use the OAM protocol, or may also use other network alarm mechanism other than the OAM protocol, such as an aggregation link alarm etc., and the detection period is generally set as 10ms;
the exchange processing module 203 is a channel for service switching and an entity for performing protection policy decision, and includes a reception selector and a transmission bridge;
the alarm propagating module 204 is used to maintain failure conditions of work paths and protection paths of all services in the protection group. The failure conditions may be due to alarm detection of a layer to which the service belongs, failure propagation of a service layer, and configuration of software; and
the protection group policy decision module 205 is used to decide whether it needs to perform switching at present and how to perform switching by polling working protection states of the protection group.

Correspondingly, the method for protection switching of a PTN using the above apparatus for protection switching of the PTN comprises the following steps.

In step one, the software unit creates a service for each protection group, which includes a work path and a protection path, and issues the service to the exchange processing module 203 through the protection group service support module 222.

In step two, the software unit configures an OAM on a work path and a protection path of each service, and issues the above OAM configuration to the OAM packet receiving and transmitting module through the OAM support module 221. An OAM packet receiving and transmitting module 201 at a source end regularly transmits an OAM message according to the received OAM configuration, and an OAM packet receiving and transmitting module 201 at a sink end parses the received OAM message, and monitors a network condition through the alarm detecting module 202 at the sink end.

For example, for an MPLS-TP network, ring protection arranges a TMS layer (Section Level of TMPLS) OAM, tunnel protection arranges TMP layer (Patch Level of TMPLS) OAM, and pseudo-wire protection arranges TMC layer (Custom Level of TMPLS) OAM. For an MPLS/IP network, a corresponding BFD detection mechanism is configured on a work path and a protection path.

In step three, when a problem occurs in a certain path, the alarm detecting module 202 at the sink end quickly detects the failure, and reports the failure to the alarm propagating module 204 at the sink end.

Failure alarms needed to be maintained by the alarm detecting module 202 include Loss of Continuity (LOC), Mismerge (MMG), Unexpected Maintenance entity group End Point (MEP) (UNM), Remote Defect Indicator (RDI), Alarm Indication Signal (AIS), Client Signal Fail (CSF), and Signal Degrade (SD) etc.

In step four, the alarm propagating module 204 at the sink end periodically polls and traverses all services, acknowledges a number of the service failure path according to the alarm of the layer to which the failed service belongs or the alarm of the service layer, and updates the protection group where the service is located in the protection group policy decision module 205 at the sink end with the path failure condition of the service.

In step five, the protection group policy decision module 205 at the sink end periodically polls all protection groups, and for each obtained failure path, determines a switching policy decision according to a protection mode, and notifies the switching policy decision to the exchange processing module 203; wherein, if SF occurs in the work path and the protection path is normal, the switching policy decision is to switch a corresponding service from the work path to the protection path; and if SF occurs in the protection path and the work path is normal, the switching policy decision is to switch the corresponding service from the protection path to the work path.

In step six, the exchange processing module 203 performs path switching on the corresponding service according to the received switching policy decision.

The implementations of the technical schemes will be described in detail below in conjunction with accompanying drawings.

As shown in Fig. 3, the hardware unit according to the present embodiment primarily includes three components, i.e., an exchange processing module, a Field-Programmable Gate Array (FPGA) and a CPU. the exchange processing module is responsible for exchanging services, forwarding an OAM message, and being used as a performer for protection switching of a service; the CPU is responsible for configuring an OAM message template and protection group information to be transmitted for FPGA; the FPGA is a core processing module of the present embodiment, and includes the following several parts: an alarm detecting module, an OAM packet receiving and transmitting module, an alarm propagating module and a protection group policy decision module, wherein, the OAM packet receiving and transmitting module includes an OAM message processing module and a fast OAM message generating module; and the protection group policy decision module includes a fast policy decision judging module and a fast switching message generating module.

The OAM message processing module is responsible for identifying and parsing the received OAM message, including CFM, MPLS-TP OAM, MPLS/IP BFD etc., extracting related information in the OAM message (such as an OAM instance number etc,), and transmitting the related information to the alarm detecting module.

The fast OAM message generating module is responsible for regularly generating and transmitting the OAM message according to an OAM message template configured by the CPU. The module buffers OAM configuration information such as an OAM message template, transmission enablement and a transmission period etc. configured by the CPU using the OAM instance number as an address. The fast OAM message generating module periodically polls the OAM instance number, and when there is an OAM message needed to be transmitted, packages and regularly transmits the messages according to the above transmission period.

The alarm detecting module is responsible for detecting an OAM alarm. Alarms such as LOC, MMG, UNM, AIS, CSF of each OAM instance are detected respectively according to the configured detection period, and the current alarm condition is buffered according to an instance number.

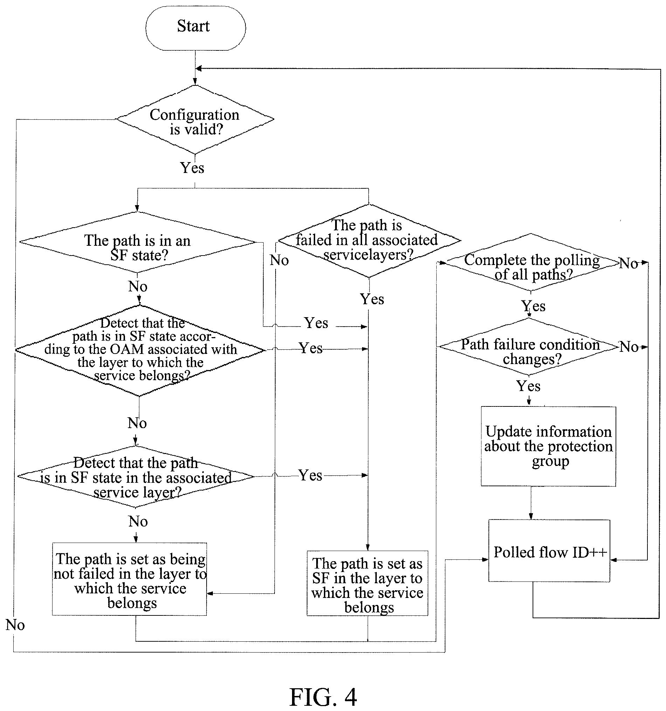

The alarm propagating module is used to propagate the OAM alarm detected by the alarm detecting module. As shown in Fig. 4, the module periodically polls a failure condition of each path by using a flow ID of the service as an address, and for each service, when the configuration is valid, it will be associated with a work path and a protection path.

For a work path and a protection path associated with each service, it is firstly judged whether the path is in an SF state, and if so, it is judged whether the path is failed, and a failure state of the path is set as SF in the layer to which the service belongs; and if no, it is judged whether the path is associated with an OAM alarm in the layer to which the service belongs, and if so, the associated OAM instance number is used as an address, and the path failure condition is acquired from the alarm detecting module; and if it is judged that the path is not associated with an OAM alarm in the layer to which the service belongs, it is judged whether the path is associated with a service layer, and if so, inquiry is performed in the module using the flow ID of the service layer associated with the path and the path failure condition is obtained; or
it is judged whether the path is failed on all associated service layers, and if so, it is determined that the path is also failed; and if not, it is determined that the path is not failed.

After the failure conditions of the work path and the protection path of the service are polled completely, it is judged whether the path failure condition of the service changes, and if so, the sate information of the associated protection group is updated in the fast policy decision judging module. After the operation ends, the polling address is incremented.

The fast policy decision judging module is used to maintain the information about all protection groups. Information such as flow IDs, SF states of work paths, SF states of protection paths, protection types, hold-off time etc. of all services in each protection group are maintained periodically by taking an instance number of the protection group as a polling address. When the update information transmitted by the alarm propagating module is received, if it is judged that the state of the work path or the protection path changes, the information about a corresponding protection group is updated. If it is judged that the state of the work path or the protection path does not change, a normal polling state is entered. In addition, for information about each polled protection group, it is determined whether protection switching needs to be performed on the protection group.

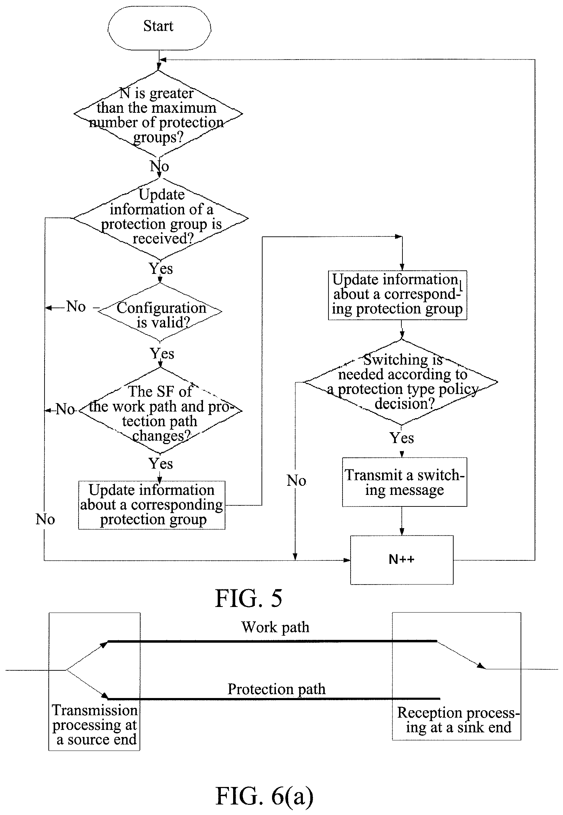

The fast switching message generating module is used to notify the exchange processing module of the switching policy decision in a manner of transmitting a fast protection message for the protection group on which the protection switching needs to be performed. After the operation ends, the polling address is incremented. The specific flow is as shown in Fig. 5.

In addition, in the present embodiment, a method for protection switching in a packet transport network applied in the above apparatus comprises:
an Operation, Administration and Maintenance (OAM) packet receiving and transmitting module receiving an OAM message;
an alarm detecting module detecting the OAM message received by the OAM packet receiving and transmitting module;
for each service, the alarm propagating module judging, according to an OAM alarm detected by the alarm detecting module or a path failure condition of a service layer associated with the service, a path failure condition of a work path and a protection path associated with the service, and updating a protection group where the service is located in the protection group policy decision module with the path failure condition, wherein the protection group where the service is located is configured by the protection group service support module to the alarm propagating module;
for each obtained path failure condition, the protection group policy decision module determining a switching policy decision according to a protection mode, and notifying the exchange processing module of the switching policy decision; and
the exchange processing module performing path switching according to the received switching policy decision.

Alternatively,
the switching policy decision comprises:
when a signal of a single point on the work path fails and the protection path is normal, the switching policy decision is switching the service from the work path to the protection path; and when a signal of a single point on the protection path fails and the work path is normal, the switching policy decision is switching the service from the protection path to the work path.

Alternatively,
the OAM packet receiving and transmitting module comprises an OAM message processing module and a fast OAM message generating module; and
the method further comprises:
the fast OAM message generating module generating and transmitting an OAM message according to the OAM configuration information configured by the OAM support module; wherein, the OAM configuration information comprises an OAM message template and a transmission period; and
the OAM message processing module identifying and parsing the received OAM message, and transmitting the OAM alarm obtained by the parsing to the alarm detecting module.

Alternatively,
the alarm detecting module storing the received OAM alarm according to an OAM instance number; the step of for each service, the alarm propagating module judging, according to an OAM alarm detected by the alarm detecting module or a path failure condition of a service layer associated with the service, a path failure condition of a work path and a protection path associated with the service comprises:
by taking a flow ID of the service as an address, for each path associated with each service, the alarm propagating module firstly judging whether the path is in a single-point signal failure state, and when it is judged that the path is not in the single-point signal failure state, judging whether the path is associated with an OAM alarm in a layer to which the service belongs, and when it is judged that the path has been associated with an OAM alarm in the layer to which the service belongs, using the associated OAM instance number as an address, and acquiring the path failure condition from the alarm detecting module; and when it is judged that the path is not associated with an OAM alarm in the layer to which the service belongs, judging whether the path is associated with a service layer, and when it is judged that the path is associated with a service layer, performing inquiry in the alarm propagating module using the flow ID of the path and obtaining the path failure condition.

Alternatively,
the protection group policy decision module comprises a fast policy decision judging module and a fast switching message generating module, and
the method further comprises:
the fast policy decision judging module maintaining information about all protection groups; for the received path failure condition transmitted by the alarm propagating module, updating the information about the protection group corresponding to the path failure condition; and for the information about each polled protection group, making a policy decision on whether the protection group needs protection switching to be performed; and
for the protection group needing protection switching to be performed on which the fast policy decision judging module has made a policy decision, the fast switching message generating module notifying the exchange processing module of the corresponding generated switching policy decision in a manner of transmitting a fast protection message.

Steps of cooperation of the above several modules will be set forth below in conjunction with a common 1+1 linear protection scenario.

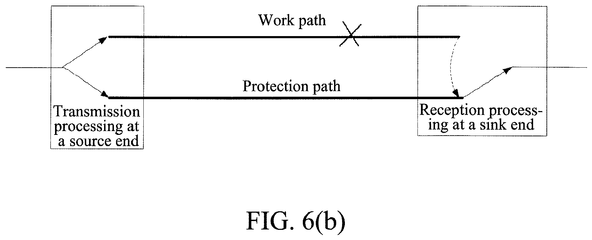

As shown in Figs. 6(a) and 6(b), 1000 protection groups are configured between a source end and a sink end. All protection groups are configured with 1+1 linear protection, and each protection group is configured with a work path and a protection path. When the source end transmits a service, the service is copied, and at the same time is transmitted to the work path and the protection path. A TMP OAM is configured respectively on the work path and the protection path, i.e., an OAM message will be transmitted periodically between the source end and the sink end. As the protection group processing mechanism is sequential polling, a service of a protection group ID=1000 consumes the longest time in terms of the protection policy decision. Assume that a service flow ID corresponding to the protection group is 1000, OAM instance numbers of the work path and the protection path of the service is 2000 and 1999. After failure occurs in the work path, cooperation between various modules at the sink end includes the following steps.

In step one, the alarm detecting module detects that there is an LOC alarm on an OAM instance of ID=2000.

The polling mechanism in the alarm detecting module will periodically poll all OAM instances, and when an OAM instance of ID=2000 is polled, an alarm maintenance table is updated with the LOC alarm. According to an operating rate of 125Mhz, the longest time which is taken from detecting the LOC alarm to polling the alarm is calculated to be T1=8ns*2000=16us.

In step two, the alarm propagating module periodically polls 1000 services, and searches for SF conditions of various paths thereof. When a 1000th service is polled, it is found that an LOC condition occurs for OAM_ID=2000 associated with the service, and OAM_ID=1999 is normal. That is, SF occurs in the work path, and the protection path is normal. The protection group 1000 is updated with the path failure condition. If 50 CLKs are taken for polling and processing of each service, the longest time which is taken to update the information about the protection group with the failure condition is T2=50*8ns*1000=400us;

In step three, the fast policy decision judging module periodically polls 1000 protection groups. When the 1000th protection group is polled, it is found that SF occurs in the work path, and the protection path is normal. The fast policy decision judging module decides that it needs to perform switching, and then judges that how to switch by a reception selector and how to switch by a transmission bridge according to the protection type. This example relates to 1+1 protection, the reception selector selects the protection path, and the transmission bridge selects concurrence.

If 100 CLKs are taken for polling and processing of each flow ID, the longest time which is taken to poll the SF of the work path of the 1000th protection group is T3=100*8ns* 1000=800us.

In step four, the fast switching message generating module packages according to the switching policy decision made by the fast policy decision judging module, transmits the generated switching message to the exchange processing module, and notifies the exchange processing module to perform switching.

In step five, the exchange processing module switches the service from the work path to the protection path according to the received switching message, and the service recovers to be normal.

It can be seen from the above that the longest time which is taken from failure occurring in a path to notifying the exchange processing module to perform switching is T=T1+T2+T3=1.216ms, i.e., the time needed to completely process policy decisions of 1000 protection groups. For the related art, T1, T2 and T3 are software polling, and process of policy decision of a single protection group needs to take about 30ms. Therefore, the present method can largely accelerate the protection switching.

The above accompanying drawings and embodiments are merely illustrated description, and are not intended to limit the implementations of the present invention. Numbers of protection groups, flow IDs and OAM entries may be more than or less than those in the above embodiments. The alarm detected by the alarm detecting module is also not limited to the related OAM alarm, and may also be port, aggregation link alarms etc. The protection model is also not limited to linear protection, and may also be ring protection, pseudo-wire dual designation protection, Hot-Standby protection, TE-FRR fast rerouting protection etc. In addition, it may also be used cooperatively with the Automatic Protection Switching (APS) protocol.

A person having ordinary skill in the art can understand that all or a part of steps in the above method can be implemented by programs instructing related hardware, and the programs can be stored in a computer readable storage medium, such as a read-only memory, disk or disc etc. Alternatively, all or a part of steps in the above embodiments can also be implemented by one or more integrated circuits. Accordingly, each module/unit in the above embodiments can be implemented in a form of hardware, or can also be implemented in a form of software functional module. The embodiments of the present invention are not limited to any particular form of a combination of hardware and software.

The above description is only the preferred embodiments of the present invention, and is not intended to limit the protection scope of the present invention. According to the inventive contents of the present invention, the present invention can have a plurality of other embodiments. Those skilled in the art can make various corresponding changes and variations according to the embodiments of the present invention without departing from the scope of the present invention.

### Industrial Applicability

After the schemes of the embodiments of the present invention are used, the time for polling alarms by the software is saved, which avoids the problem of system stability due to frequent interruption; the serial waiting time is saved; and the polling interval time of the CPU is saved, and the protection policy decision can be performed more timely. In addition, the time for protection switching can be largely reduced, thereby achieving requirements on lossless switching of 50ms for the PTN, improving the network quality, and ensuring reliability of the network; and a scenario where the networking is complex and services of a number of protection groups co-exist can be supported, thereby improving the scalability of the network.

## Claims

1. An apparatus for protection switching in a packet transport network, comprising a hardware unit (21) and a software unit (22), **characterized in that** the hardware unit (21) comprises an Operation, Administration and Maintenance OAM, packet receiving and transmitting module (201), an alarm detecting module (202), an exchange processing module (203), an alarm propagating module (204) and a protection group policy decision module (205); the software unit (22) comprising a protection group service support module (222) and an OAM support module (221); wherein,
the software unit is configured to create a service for each protection group, which includes a work path and a protection path, and to issue the service to the exchange processing module through the protection group service support module;
the alarm propagating module (204) is configured to, for each service, judge, according to an OAM alarm detected by the alarm detecting module (202) or according to a path failure condition of a service layer associated with the service, a path failure condition of a work path and a protection path associated with the service, and update the protection group where the service is located in the protection group policy decision module (205) with the path failure condition;
the protection group policy decision module (205) is configured to, for each obtained path failure condition, determine a switching policy decision according to a protection mode, and notify the exchange processing module (203) of the switching policy decision, wherein, the exchange processing module (203) is a channel for service switching and an entity for performing protection policy decision and includes a reception selector and a transmission bridge, and is configured to perform path switching on the corresponding service according to the received switching policy decision;
the OAM support module (221) is configured to transmit OAM configuration information to the OAM packet receiving and transmitting module, and instruct the OAM packet receiving and transmitting module (201) to receive and transmit OAM messages according to the OAM configuration information; and
the OAM packet receiving and transmitting module (201) comprises an OAM message processing module,
wherein, the OAM message processing module is configured to identify and parse a received OAM message, and transmit an OAM alarm obtained by the parsing to the alarm detecting module (202).

2. The apparatus according to claim 1, wherein,
the switching policy decision comprises:
when a signal of a single point on the work path fails and the protection path is normal, the switching policy decision is switching the service from the work path to the protection path; and when a signal of a single point on the protection path fails and the work path is normal, the switching policy decision is switching the service from the protection path to the work path.

3. The apparatus according to claim 1, wherein,
the OAM packet receiving and transmitting module further comprises a fast OAM message generating module, wherein, the fast OAM message generating module is configured to generate and transmit an OAM message according to the OAM configuration information configured by the OAM support module (221); wherein, the OAM configuration information comprises an OAM message template and a transmission period.

4. The apparatus according to claim 3, wherein,
the alarm detecting module (202) is configured to store the received OAM alarm according to an OAM instance number;
the alarm propagating module (204) is configured to, for each service, judge, according to an OAM alarm detected by the alarm detecting module (202) or a path failure condition of a service layer associated with the service, a path failure condition of a work path and a protection path associated with the service in the following way:
by taking a flow ID of the service as an address, for each path associated with each service, firstly judging whether the path is in a single-point signal failure state, and when judging that the path is not in the single-point signal failure state, judging whether the path is associated with an OAM alarm in a layer to which the service belongs, and when judging that the path has been associated with an OAM alarm in the layer to which the service belongs, using an associated OAM instance number as an address, and acquiring the failure condition of the path from the alarm detecting module (202); and when judging that the path is not associated with an OAM alarm in the layer to which the service belongs, judging whether the path is associated with a service layer, and when judging that the path is associated with a service layer, performing inquiry in the alarm propagating module (204) using the flow ID of the path and obtaining the failure condition of the path.

5. The apparatus according to claim 1, wherein,
the protection group policy decision module (205) comprises a fast policy decision judging module and a fast switching message generating module, wherein,
the fast policy decision judging module is configured to maintain information about all protection groups; for a received path failure condition transmitted by the alarm propagating module (204), update the information about the protection group corresponding to the path failure condition; and for the information about each polled protection group, make a policy decision on whether the protection group needs protection switching to be performed; and
the fast switching message generating module is configured to, for the protection group needing protection switching to be performed on which the fast policy decision judging module has made a policy decision, notify the exchange processing module (203) of a corresponding generated switching policy decision in a manner of transmitting a fast protection message.

6. A method for protection switching in a packet transport network, applied in the apparatus according to any of claims 1-5, **characterized in that** the method comprises:
creating, by the software unit of said apparatus, a service for each protection group, which includes a work path and a protection path, and issuing the service to the exchange processing module through the protection group service support module;
the Operation, Administration and Maintenance, OAM, packet receiving and transmitting module (201) receiving an OAM message, wherein, the OAM packet receiving and transmitting module (201) comprises an OAM message processing module;
the OAM message processing module identifying and parsing the received OAM message, and transmitting an OAM alarm obtained by the parsing to the alarm detecting module (202);
the alarm detecting module (202) detecting the OAM message received by the OAM packet receiving and transmitting module (201);
for the service of each protection group, the alarm propagating module (204) judging, according to the OAM alarm detected by the alarm detecting module (202) or according to a path failure condition of a service layer associated with the service, a path failure condition of a work path and a protection path associated with the service, and updating the protection group where the service is located in the protection group policy decision module (205) with the path failure condition;
for each obtained path failure condition, the protection group policy decision module (205) determining a switching policy decision according to a protection mode, and notifying the exchange processing module (203) of the switching policy decision; and
the exchange processing module (203) performing path switching according to the received switching policy decision.

7. The method according to claim 6, wherein,
the switching policy decision comprises:
when a signal of a single point on the work path fails and the protection path is normal, the switching policy decision is switching the service from the work path to the protection path; and when a signal of a single point on the protection path fails and the work path is normal, the switching policy decision is switching the service from the protection path to the work path.

8. The method according to claim 6, wherein,
the OAM packet receiving and transmitting module further comprises a fast OAM message generating module; and the method further comprises:
the fast OAM message generating module generating and transmitting an OAM message according to the OAM configuration information configured by the OAM support module (221); wherein, the OAM configuration information comprises an OAM message template and a transmission period.

9. The method according to claim 8, further comprising:
the alarm detecting module ( 202) storing the received OAM alarm according to an OAM instance number; wherein,
the step of for each service, the alarm propagating module (204) judging, according to an OAM alarm detected by the alarm detecting module (202) or a path failure condition of a service layer associated with the service, a path failure condition of a work path and a protection path associated with the service comprises:
by taking a flow ID of the service as an address, for each path associated with each service, the alarm propagating module (204) firstly judging whether the path is in a single-point signal failure state, and when judging that the path is not in the single-point signal failure state, judging whether the path is associated with an OAM alarm in a layer to which the service belongs, and when judging that the path has been associated with an OAM alarm in the layer to which the service belongs, using an associated OAM instance number as an address, and acquiring the failure condition of the path from the alarm detecting module (202); and
when judging that the path is not associated with an OAM alarm in the layer to which the service belongs, judging whether the path is associated with a service layer, and when judging that the path is associated with a service layer, performing inquiry in the alarm propagating module (204) using the flow ID of the path, and obtaining the failure condition of the path.

10. The method according to claim 6, wherein,
the protection group policy decision module (205) comprises a fast policy decision judging module and a fast switching message generating module, and
the method further comprises:
the fast policy decision judging module maintaining information about all protection groups; for a received path failure condition transmitted by the alarm propagating module (204), updating the information about the protection group corresponding to the path failure condition; and for the information about each polled protection group, making a policy decision on whether the protection group needs protection switching to be performed; and
for the protection group needing protection switching to be performed on which the fast policy decision judging module has made a policy decision, the fast switching message generating module notifying the exchange processing module (203) of a corresponding generated switching policy decision in a manner of transmitting a fast protection message.

## Patentansprüche

1. Vorrichtung zur Schutzumschaltung in einem Pakettransportnetz, die eine Hardware-Einheit (21) und eine Software-Einheit (22) umfasst,
**dadurch gekennzeichnet, dass** die Hardware-Einheit (21) Folgendes umfasst: eine Operation, Administration and Maintenance (OAM)-Paketempfangs- und -sende-Modul (201), ein Alarmdetektionsmodul (202), ein Austauschverarbeitungsmodul (203), ein Alarmverbreitungsmodul (204) und ein Schutzgruppenvorschriften-Enscheidungsmodul (205);
wobei die Software-Einheit (22) ein Schutzgruppendienst-Unterstützungsmodul (222) und ein OAM-Unterstützungsmodul (221) umfasst; wobei:
die Software-Einheit dafür konfiguriert ist, einen Dienst für jede Schutzgruppe zu erzeugen, die einen Arbeitspfad und einen Schutzpfad enthält, und den Dienst durch das Schutzgruppendienst-Unterstützungsmodul an das Austauschverarbeitungsmodul auszugeben;
das Alarmverbreitungsmodul (204) dafür konfiguriert ist, für jeden Dienst gemäß einem durch das Alarmdetektionsmodul (202) detektierten OAM-Alarm oder gemäß einem Pfadausfallzustand einer mit dem Dienst verknüpften Dienstschicht einen Pfadausfallzustand eines Arbeitspfades und eines Schutzpfades, die mit dem Dienst verknüpft sind, zu beurteilen und die Schutzgruppe, wo sich der Dienst in dem Schutzgruppenvorschriften-Enscheidungsmodul (205) befindet, mit dem Pfadausfallzustand zu aktualisieren;
das Schutzgruppenvorschriften-Enscheidungsmodul (205) dafür konfiguriert ist, für jeden erhaltenen Pfadausfallzustand eine Umschaltvorschriftenentscheidung gemäß einem Schutzmodus zu treffen und das Austauschverarbeitungsmodul (203) über die Umschaltvorschriftenentscheidung zu informieren,
wobei das Austauschverarbeitungsmodul (203) ein Kanal zur Dienstumschaltung und eine Entität zum Ausführen der Schutzvorschriftenentscheidung ist und einen Empfangswähler und eine Übertragungsbrücke enthält, und dafür konfiguriert ist, eine Pfadumschaltung auf dem entsprechenden Dienst gemäß der empfangenen Umschaltvorschriftenentscheidung auszuführen;
das OAM-Unterstützungsmodul (221) dafür konfiguriert ist, OAM-Konfigurationsinformationen zu dem OAM-Paketempfangs- und -sende-Modul zu übertragen und das OAM-Paketempfangs- und -sende-Modul (201) anzuweisen, OAM-Nachrichten gemäß den OAM-Konfigurationsinformationen zu empfangen und zu senden; und
das OAM-Paketempfangs- und -sende-Modul (201) ein OAM-Nachrichtenverarbeitungsmodul umfasst, wobei das OAM-Nachrichtenverarbeitungsmodul dafür konfiguriert ist, eine empfangene OAM-Nachricht zu identifizieren und zu parsen und einen durch das Parsen erhaltenen OAM-Alarm an das Alarmdetektionsmodul (202) zu senden.

2. Vorrichtung nach Anspruch 1, wobei die Umschaltvorschriftenentscheidung umfasst:
wenn ein Signal eines einzelnen Punktes auf dem Arbeitspfad ausfällt und der Schutzpfad normal ist, so schaltet die Umschaltvorschriftenentscheidung den Dienst von dem Arbeitspfad zu dem Schutzpfad um; und wenn ein Signal eines einzelnen Punktes auf dem Schutzpfad ausfällt und der Arbeitspfad normal ist, so schaltet die Umschaltvorschriftenentscheidung den Dienst von dem Schutzpfad zu dem Arbeitspfad um.

3. Vorrichtung nach Anspruch 1, wobei:
das OAM-Paketempfangs- und -sende-Modul des Weiteren ein schnelles OAM-Nachrichtengenerierungsmodul umfasst, wobei das schnelle OAM-Nachrichtengenerierungsmodul dafür konfiguriert ist, eine OAM-Nachricht gemäß den durch das OAM-Unterstützungsmodul (221) konfigurierten OAM-Konfigurationsinformationen zu generieren und zu senden; wobei die OAM-Konfigurationsinformationen eine OAM-Nachrichtenvorlage und einen Sendezeitraum umfassen.

4. Vorrichtung nach Anspruch 3, wobei
das Alarmdetektionsmodul (202) dafür konfiguriert ist, den empfangenen OAM-Alarm gemäß einer OAM-Instanznummer zu speichern;
das Alarmverbreitungsmodul (204) dafür konfiguriert ist, für jeden Dienst gemäß einem durch das Alarmdetektionsmodul (202) detektierten OAM-Alarm oder einem Pfadausfallzustand einer mit dem Dienst verknüpften Dienstschicht einen Pfadausfallzustand eines Arbeitspfades und eines Schutzpfades, die mit dem Dienst verknüpft sind, in der folgenden Weise zu beurteilen:
durch Verwenden einer Fluss-ID des Dienstes als eine Adresse, für jeden Pfad, der mit jedem Dienst verknüpft ist, zuerst Beurteilen, ob der Pfad in einem Einzelpunktsignal-Ausfallzustand ist, und wenn beurteilt wird, dass der Pfad nicht im Einzelpunktsignal-Ausfallzustand ist, Beurteilen, ob der Pfad mit einem OAM-Alarm in einer Schicht verknüpft ist, zu der der Dienst gehört, und wenn beurteilt wird, dass der Pfad mit einem OAM-Alarm in der Schicht verknüpft ist, zu der der Dienst gehört, Verwenden einer zugehörigen OAM-Instanznummer als eine Adresse, und Erfassen des Ausfallzustandes des Pfades von dem Alarmdetektionsmodul (202); und wenn beurteilt wird, dass der Pfad nicht mit einem OAM-Alarm in der Schicht verknüpft ist, zu der der Dienst gehört, Beurteilen, ob der Pfad mit einer Dienstschicht verknüpft ist, und wenn beurteilt wird, dass der Pfad mit einer Dienstschicht verknüpft ist, Ausführen einer Anfrage in dem Alarmverbreitungsmodul (204) unter Verwendung der Fluss-ID des Pfades und Erhalten des Ausfallzustandes des Pfades.

5. Vorrichtung nach Anspruch 1, wobei
das Schutzgruppenvorschriften-Enscheidungsmodul (205) ein schnelles Vorschriftenentscheidungs-Beurteilungsmodul und ein schnelles Umschaltnachrichtengenerierungsmodul umfasst,
wobei das schnelle Vorschriftenentscheidungs-Beurteilungsmodul dafür konfiguriert ist, Informationen über alle Schutzgruppen zu verwalten; für einen empfangenen Pfadausfallzustand, der durch das Alarmverbreitungsmodul (204) gesendet wurde, die Informationen über die Schutzgruppe zu aktualisieren, die dem Pfadausfallzustand entsprechen; und für die Informationen über jede abgefragte Schutzgruppe, Treffen einer Vorschriftenentscheidung darüber, ob für die Schutzgruppe eine Schutzumschaltung ausgeführt werden muss; und
das schnelle Umschaltnachrichtengenerierungsmodul dafür konfiguriert ist, für die Schutzgruppe, für die Schutzgruppe eine Schutzumschaltung ausgeführt werden muss, worüber das schnelle Vorschriftenentscheidungs-Beurteilungsmodul eine Vorschriftenentscheidung getroffen hat, das Austauschverarbeitungsmodul (203) über eine entsprechende generierte Umschaltvorschriftenentscheidung in Form des Sendens einer schnellen Schutznachricht zu informieren.

6. Verfahren zur Schutzumschaltung in einem Pakettransportnetz, das in der Vorrichtung nach einem der Ansprüche 1-5 angewendet wird, **dadurch gekennzeichnet, dass** das Verfahren Folgendes umfasst:
Erzeugen, durch die Software-Einheit der Vorrichtung, eines Dienstes für jede Schutzgruppe, die einen Arbeitspfad und einen Schutzpfad enthält, und Ausgeben des Dienstes durch das Schutzgruppendienst-Unterstützungsmodul an das Austauschverarbeitungsmodul;
das Operation, Administration and Maintenance (OAM)-Paketempfangs- und -sende-Modul (201) empfängt eine OAM-Nachricht, wobei das OAM-Paketempfangs- und -sende-Modul (201) ein OAM-Nachrichtenverarbeitungsmodul umfasst;
das OAM-Nachrichtenverarbeitungsmodul identifiziert und parst die empfangene OAM-Nachricht und sendet einen OAM-Alarm, der durch das Parsen erhalten wurde, an das Alarmdetektionsmodul (202);
das Alarmdetektionsmodul (202) detektiert die OAM-Nachricht, die durch das OAM-Paketempfangs- und -sende-Modul (201) empfangen wurde;
für den Dienst jeder Schutzgruppe beurteilt das Alarmverbreitungsmodul (204) gemäß einem durch das Alarmdetektionsmodul (202) detektierten OAM-Alarm oder gemäß einem Pfadausfallzustand einer mit dem Dienst verknüpften Dienstschicht einen Pfadausfallzustand eines Arbeitspfades und eines Schutzpfades, die mit dem Dienst verknüpft sind, und aktualisiert die Schutzgruppe, wo sich der Dienst in dem Schutzgruppenvorschriften-Enscheidungsmodul (205) befindet, mit dem Pfadausfallzustand ;
für jeden erhaltenen Pfadausfallzustand trifft das Schutzgruppenvorschriften-Enscheidungsmodul (205) eine Umschaltvorschriftenentscheidung gemäß einem Schutzmodus und informiert das Austauschverarbeitungsmodul (203) über die Umschaltvorschriftenentscheidung; und
das Austauschverarbeitungsmodul (203) führt eine Pfadumschaltung gemäß der empfangenen Umschaltvorschriftenentscheidung aus.

7. Verfahren nach Anspruch 6, wobei die Umschaltvorschriftenentscheidung Folgendes umfasst:
wenn ein Signal eines einzelnen Punktes auf dem Arbeitspfad ausfällt und der Schutzpfad normal ist, so schaltet die Umschaltvorschriftenentscheidung den Dienst von dem Arbeitspfad zu dem Schutzpfad um; und wenn ein Signal eines einzelnen Punktes auf dem Schutzpfad ausfällt und der Arbeitspfad normal ist, so schaltet die Umschaltvorschriftenentscheidung den Dienst von dem Schutzpfad zu dem Arbeitspfad um.

8. Verfahren nach Anspruch 6, wobei
das OAM-Paketempfangs- und -sende-Modul des Weiteren ein schnelles OAM-Nachrichtengenerierungsmodul umfasst, und das Verfahren des Weiteren Folgendes umfasst:
das schnelle OAM-Nachrichtengenerierungsmodul generiert und sendet eine gemäß den durch das OAM-Unterstützungsmodul (221) konfigurierten OAM-Konfigurationsinformationen; wobei die OAM-Konfigurationsinformationen eine OAM-Nachrichtenvorlage und einen Sendezeitraum umfassen.

9. Verfahren nach Anspruch 8, das des Weiteren Folgendes umfasst:
das Alarmdetektionsmodul (202) speichert den empfangenen OAM-Alarm gemäß einer OAM-Instanznummer; wobei
der Schritt, in dem das Alarmverbreitungsmodul (204) - für jeden Dienst - gemäß einem durch das Alarmdetektionsmodul (202) detektierten OAM-Alarm oder einem Pfadausfallzustand einer mit dem Dienst verknüpften Dienstschicht einen Pfadausfallzustand eines Arbeitspfades und eines Schutzpfades, die mit dem Dienst verknüpft sind, beurteilt, Folgendes umfasst:
durch Verwenden einer Fluss-ID des Dienstes als eine Adresse, für jeden Pfad, der mit jedem Dienst verknüpft ist, zuerst Beurteilen, ob der Pfad in einem Einzelpunktsignal-Ausfallzustand ist, und wenn beurteilt wird, dass der Pfad nicht im Einzelpunktsignal-Ausfallzustand ist, Beurteilen, ob der Pfad mit einem OAM-Alarm in einer Schicht verknüpft ist, zu der der Dienst gehört, und wenn beurteilt wird, dass der Pfad mit einem OAM-Alarm in der Schicht verknüpft ist, zu der der Dienst gehört, Verwenden einer zugehörigen OAM-Instanznummer als eine Adresse, und Erfassen des Ausfallzustandes des Pfades von dem Alarmdetektionsmodul (202); und wenn beurteilt wird, dass der Pfad nicht mit einem OAM-Alarm in der Schicht verknüpft ist, zu der der Dienst gehört, Beurteilen, ob der Pfad mit einer Dienstschicht verknüpft ist, und wenn beurteilt wird, dass der Pfad mit einer Dienstschicht verknüpft ist, Ausführen einer Anfrage in dem Alarmverbreitungsmodul (204) unter Verwendung der Fluss-ID des Pfades und Erhalten des Ausfallzustandes des Pfades.

10. Verfahren nach Anspruch 6, wobei
das Schutzgruppenvorschriften-Enscheidungsmodul (205) ein schnelles Vorschriftenentscheidungs-Beurteilungsmodul und ein schnelles Umschaltnachrichtengenerierungsmodul umfasst, und das Verfahren des Weiteren Folgendes umfasst:
das schnelle Vorschriftenentscheidungs-Beurteilungsmodul verwaltet Informationen über alle Schutzgruppen; aktualisiert für einen empfangenen Pfadausfallzustand, der durch das Alarmverbreitungsmodul (204) gesendet wurde, die Informationen über die Schutzgruppe, die dem Pfadausfallzustand entspricht; und trifft für die Informationen über jede abgefragte Schutzgruppe eine Vorschriftenentscheidung darüber, ob für die Schutzgruppe eine Schutzumschaltung ausgeführt werden muss; und
für die Schutzgruppe, für die eine Schutzumschaltung ausgeführt werden muss, worüber das schnelle Vorschriftenentscheidungs-Beurteilungsmodul eine Vorschriftenentscheidung getroffen hat, informiert das schnelle Umschaltnachrichtengenerierungsmodul das Austauschverarbeitungsmodul (203) über eine entsprechende generierte Umschaltvorschriftenentscheidung in Form des Sendens einer schnellen Schutznachricht.

## Revendications

1. Appareil de commutation de protection dans un réseau de transport en paquets, comprenant une unité matérielle (21) et une unité logicielle (22), **caractérisé en ce que** l'unité matérielle (21) comprend un module de réception et de transmission de paquets d'exploitation, d'administration et de maintenance, OAM, (201), un module de détection d'alarme (202), un module de traitement d'échange (203), un module de propagation d'alarme (204) et un module de décision de politique de groupe de protections (205) ; l'unité logicielle (22) comprenant un module de prise en charge de service de groupe de protections (222) et un module de prise en charge OAM (221) ; dans lequel
l'unité logicielle est configurée pour créer un service pour chaque groupe de protections, comprenant une voie de fonctionnement et une voie de protection, et pour émettre le service au module de traitement d'échange par l'intermédiaire du module de prise en charge de service de groupe de protections ;
le module de propagation d'alarme (204) est configuré pour, pour chaque service, juger, en fonction d'une alarme OAM détectée par le module de détection d'alarme (202) ou en fonction d'une condition d'échec de voie d'une couche de service associée au service, une condition d'échec de voie d'une voie de fonctionnement et d'une voie de protection associées au service, et mettre à jour le groupe de protections où le service est situé dans le module de décision de politique de groupe de protections (205) avec la condition d'échec de voie ;
le module de décision de politique de groupe de protections (205) est configuré pour, pour chaque condition d'échec de voie obtenue, déterminer une décision de politique de commutation en fonction d'un mode de protection, et notifier, au module de traitement d'échange (203), la décision de politique de commutation, dans lequel
le module de traitement d'échange (203) est un canal de commutation de services et une entité d'exécution de décision de politique de protection et comprend un sélecteur de réception et un pont de transmission, et est configuré pour effectuer une commutation de voies sur le service correspondant en fonction de la décision de politique de commutation reçue ;
le module de prise en charge OAM (221) est configuré pour transmettre des informations de configuration OAM au module de réception et de transmission de paquets OAM, et instruire au module de réception et de transmission de paquets OAM (201) de recevoir et de transmettre des messages OAM en fonction des informations de configuration OAM ; et
le module de réception et de transmission de paquets OAM (201) comprend un module de traitement de message OAM, dans lequel le module de traitement de message OAM est configuré pour effectuer l'identification et l'analyse syntaxique d'un message OAM reçu, et la transmission d'une alarme OAM obtenue par l'analyse syntaxique à destination du module de détection d'alarme (202).

2. Appareil selon la revendication 1, dans lequel
la décision de politique de commutation comprend :
lors d'un échec d'un signal d'un point unique sur la voie de fonctionnement et lorsque la voie de protections est normale, la décision de politique de commutation est la commutation du service de la voie de fonctionnement à la voie de protection ; et
lors d'un échec d'un signal d'un point unique sur la voie de protection et lorsque la voie de fonctionnement est normale, la décision de politique de commutation est la commutation du service de la voie de protection à la voie de fonctionnement.

3. Appareil selon la revendication 1, dans lequel
le module de réception et de transmission de paquets OAM comprend en outre un module de génération de message OAM rapide, dans lequel
le module de génération de message OAM rapide est configuré pour générer et transmettre un message OAM en fonction des informations de configuration OAM configurées par le module de prise en charge OAM (221) ; dans lequel les informations de configuration OAM comprennent un modèle de message OAM et une période de transmission.

4. Appareil selon la revendication 3, dans lequel
le module de détection d'alarme (202) est configuré pour mémoriser l'alarme OAM reçue en fonction d'un numéro d'instance OAM ; le module de propagation d'alarme (204) est configuré pour, pour chaque service, juger, en fonction d'une alarme OAM détectée par le module de détection d'alarme (202) ou d'une condition d'échec de voie d'une couche de service associée au service, une condition d'échec de voie d'une voie de fonctionnement et d'une voie de protection associées au service de la manière suivante :
en prenant un identifiant de flux du service en tant qu'une adresse, pour chaque voie associée à chaque service, tout d'abord juger si la voie est dans un état d'échec de signal de point unique et, lorsqu'il est jugé que la voie n'est pas dans l'état d'échec de signal de point unique, juger si la voie est associée à une alarme OAM dans une couche à laquelle appartient le service, et, lorsqu'il est jugé que la voie a été associée à une alarme OAM dans la couche à laquelle appartient le service, utiliser un numéro d'instance OAM associé en tant qu'une adresse, et acquérir la condition d'échec de la voie auprès du module de détection d'alarme (202) ; et, lorsqu'il est jugé que la voie n'est pas associée à une alarme OAM dans la couche à laquelle appartient le service, juger si la voie est associée à une couche de service, et, lorsqu'il est jugé que la voie est associée à une couche de service, exécuter une interrogation dans le module de propagation d'alarme (204) en utilisant l'identifiant de flux de la voie et obtenir la condition d'échec de la voie.

5. Appareil selon la revendication 1, dans lequel
le module de décision de politique de groupe de protections (205) comprend un module de jugement de décision de politique rapide et un module de génération de message de commutation rapide, dans lequel
le module de jugement de décision de politique rapide est configuré pour conserver des informations relatives à tous les groupes de protections ; pour une condition d'échec de voie reçue transmise par le module de propagation d'alarme (204), mettre à jour les informations relatives au groupe de protections correspondant à la condition d'échec de voie ; et, pour les informations relatives à chaque groupe de protections interrogé, prendre une décision de politique décidant si le groupe de protections a besoin qu'une commutation de protection soit effectuée ; et
le module de génération de message de commutation rapide est configuré pour, pour le groupe de protections ayant besoin qu'une commutation de protection soit effectuée et pour lequel le module de jugement de décision de politique rapide a pris une décision de politique, notifier, au module de traitement d'échange (203), une décision de politique de commutation générée correspondante d'une manière consistant à transmettre un message de protection rapide.

6. Procédé de commutation de protection dans un réseau de transport en paquets, appliqué dans l'appareil selon l'une quelconque des revendications 1 à 5, **caractérisé en ce que** le procédé comprend :
la création, par l'unité logicielle dudit appareil, d'un service pour chaque groupe de protections, comprenant une voie de fonctionnement et une voie de protection, et l'émission du service au module de traitement d'échange par l'intermédiaire du module de prise en charge de service de groupe de protections ;
le module de réception et de transmission de paquets d'exploitation, d'administration et de maintenance, OAM, (201) effectuant la réception d'un message OAM, dans lequel le module de réception et de transmission de paquets OAM (201) comprend un module de traitement de message OAM ;
le module de traitement de message OAM effectuant l'identification et l'analyse syntaxique du message OAM reçu, et la transmission d'une alarme OAM obtenue par l'analyse syntaxique à destination du module de détection d'alarme (202) ;
le module de détection d'alarme (202) effectuant la détection du message OAM reçu par le module de réception et de transmission de paquets OAM (201) pour le service de chaque groupe de protections ;
le module de propagation d'alarme (204) effectuant le jugement, en fonction de l'alarme OAM détectée par le module de détection d'alarme (202) ou en fonction d'une condition d'échec de voie d'une couche de service associée au service, d'une condition d'échec de voie d'une voie de fonctionnement et d'une voie de protection associées au service, et la mise à jour du groupe de protections où le service est situé dans le module de décision de politique de groupe de protections (205) avec la condition d'échec de voie ;
pour chaque condition d'échec de voie obtenue, le module de décision de politique de groupe de protections (205) effectue la détermination d'une décision de politique de commutation en fonction d'un mode de protection, et la notification, au module de traitement d'échange (203), de la décision de politique de commutation ; et
le module de traitement d'échange (203) effectue une commutation de voies en fonction de la décision de politique de commutation reçue.

7. Procédé selon la revendication 6, dans lequel
la décision de politique de commutation comprend :
lors d'un échec d'un signal d'un point unique sur la voie de fonctionnement et lorsque la voie de protections est normale, la décision de politique de commutation est la commutation du service de la voie de fonctionnement à la voie de protection ; et
lors d'un échec d'un signal d'un point unique sur la voie de protection et lorsque la voie de fonctionnement est normale, la décision de politique de commutation est la commutation du service de la voie de protection à la voie de fonctionnement.

8. Procédé selon la revendication 6, dans lequel
le module de réception et de transmission de paquets OAM comprend en outre un module de génération de message OAM rapide ; et le procédé comprend en outre :
le module de génération de message OAM rapide effectuant la génération et la transmission d'un message OAM en fonction des informations de configuration OAM configurées par le module de prise en charge OAM (221) ; dans lequel les informations de configuration OAM comprennent un modèle de message OAM et une période de transmission.

9. Procédé selon la revendication 8, comprenant en outre :
le module de détection d'alarme (202) effectuant la mémorisation de l'alarme OAM reçue en fonction d'un numéro d'instance OAM ; dans lequel
l'étape à laquelle, pour chaque service, le module de propagation d'alarme (204) effectue le jugement, en fonction d'une alarme OAM détectée par le module de détection d'alarme (202) ou d'une condition d'échec de voie d'une couche de service associée au service, d'une condition d'échec de voie d'une voie de fonctionnement et d'une voie de protection associées au service comprend :
en prenant un identifiant de flux du service en tant qu'une adresse, pour chaque voie associée à chaque service, le module de propagation d'alarme (204) effectue tout d'abord le jugement si la voie est dans un état d'échec de signal de point unique et, lorsqu'il est jugé que la voie n'est pas dans l'état d'échec de signal de point unique, le jugement si la voie est associée à une alarme OAM dans une couche à laquelle appartient le service, et, lorsqu'il est jugé que la voie a été associée à une alarme OAM dans la couche à laquelle appartient le service, l'utilisation d'un numéro d'instance OAM associé en tant qu'une adresse, et l'acquisition de la condition d'échec de la voie auprès du module de détection d'alarme (202) ; et
lorsqu'il est jugé que la voie n'est pas associée à une alarme OAM dans la couche à laquelle appartient le service, le jugement si la voie est associée à une couche de service, et, lorsqu'il est jugé que la voie est associée à une couche de service, l'exécution d'une interrogation dans le module de propagation d'alarme (204) en utilisant l'identifiant de flux de la voie et l'obtention de la condition d'échec de la voie.

10. Procédé selon la revendication 6, dans lequel
le module de décision de politique de groupe de protections (205) comprend un module de jugement de décision de politique rapide et un module de génération de message de commutation rapide, et
le procédé comprend en outre :
le module de jugement de décision de politique rapide effectue la conservation des informations relatives à tous les groupes de protections ; pour une condition d'échec de voie reçue transmise par le module de propagation d'alarme (204), la mise à jour des informations relatives au groupe de protections correspondant à la condition d'échec de voie ; et, pour les informations relatives à chaque groupe de protections interrogé, la prise d'une décision de politique décidant si le groupe de protections a besoin qu'une commutation de protection soit effectuée ; et
pour le groupe de protections ayant besoin qu'une commutation de protection soit effectuée et pour lequel le module de jugement de décision de politique rapide a pris une décision de politique, le module de génération de message de commutation rapide effectue la notification, au module de traitement d'échange (203), d'une décision de politique de commutation générée correspondante d'une manière consistant à transmettre un message de protection rapide.
